# EUROPEAN PATENT APPLICATION

(11) **EP 3 321 774 A1**
(43) Date of publication of application: **16.05.2018**
(21) Application number: 16821141.5
(22) Date of filing: 03.06.2016
(51) Int. Cl.: G06F 3/01

(54) **TACTILE SENSATION REPRODUCTION DEVICE**

(30) Priority: 08.07.2015 JP 2015137054
(71) Applicant: Alps Electric Co., Ltd., Tokyo 145-8501 (JP)
(72) Inventor: HAGIWARA, Yasuji, Tokyo 145-8501 (JP); SATO, Wataru, Tokyo 145-8501 (JP); KAWANA, Yuzuru, Tokyo 145-8501 (JP); TAKAI, Daisuke, Tokyo 145-8501 (JP)
(74) Representative: Schmitt-Nilson Schraud Waibel Wohlfrom Patentanwälte Partnerschaft mbB
(86) International application number: PCT/JP2016/066563
(87) International publication number: WO 2017/006670

(57) **Abstract**

[Object] To provide a tactile-sensation-reproducing apparatus capable of applying, to each finger, a reaction force simulated as if an object is held with the fingers.

[Solution] A tactile-sensation-reproducing apparatus 1 includes input devices 20. In each of the input devices 20, two first operation members 33 and one second operation member 43 project from the case 21. The input device 20 is operated with the second operation member 43 held with a thumb and the first operation members 33 held with index and middle fingers, respectively, as if an article were held. A control signal is transmitted from a control unit to a motor provided in the case 21, and reaction forces exerted by the first operation members 33 and the second operation member 43 are applied to the fingers, respectively. The reaction forces applied to the fingers are simulated as a sensation of hardness, softness, or elasticity of the object.

## Description

### Technical Field

The present invention relates to a tactile-sensation-reproducing apparatus from which a reaction force simulated as a touch of a predetermined object with fingers of a hand can be received when an input device thereof is touched with the fingers.

### Background Art

An invention concerning a virtual-space display apparatus is disclosed by PTL 1.

In this virtual-space display apparatus, a terminal communication unit and a server are capable of communicating with each other. The terminal communication unit is provided with a touch panel including a liquid-crystal display and an input unit.

On the basis of communication with the server, an image of a shopping mall is displayed on the liquid-crystal display of the touch panel. If a user makes a dragging motion on the touch panel, the user can move the view of the shopping mall that is being displayed. If the user taps a product thumbnail in the screen showing the shopping mall, detailed information on that product is displayed on the screen. The user can temporarily store products that he/she plans to buy in a stock area. When the user performs a payment process for the stocked products, the user can buy those products.

### Citation List

### Patent Literature

PTL 1: Japanese Unexamined Patent Application Publication No. 2012-234355

### Summary of Invention

### Technical Problem

With the virtual-space display apparatus disclosed by PTL 1, the user can check the prices and the colors of products displayed in stores of the shopping mall and can search products that he/she wants to buy while comparing pieces of detailed information on those products.

However, since the user cannot actually touch the products, the user cannot feel the size, the texture, and so forth of each of the products with his/her hand.

The present invention is to solve the above known problem and provides a tactile-sensation-reproducing apparatus capable of mechanically generating a reaction force simulated as a tactile sensation that is to be obtained at the touch of a predetermined object with a hand.

### Solution to Problem

A tactile-sensation-reproducing apparatus according to the present invention includes an input device and a control unit,
wherein the input device includes an operation member that is pressable with a finger and is movable back and forth, a detecting member that detects a position to which the operation member is moved, and a motor that applies a force to the operation member,
wherein the control unit stores information on a tactile sensation of a predetermined touching object, and
wherein the control unit controls an output of the motor such that if it is detected with reference to a detection signal from the detecting member that the operation member is pressed with a finger, a reaction force simulated as a tactile sensation of the touching object is applied from the operation member to the finger.

In the tactile-sensation-reproducing apparatus according to the present invention, the control unit stores information on a size of the touching object, and that if it is detected with reference to the detection signal from the detecting member that the operation member is moved by a length corresponding to a length by which the finger is to be moved to touch the touching object, the control unit controls the output of the motor such that a reaction force starts to be applied from the operation member to the finger at a position of the detection.

In the tactile-sensation-reproducing apparatus according to the present invention, it is preferable that the input device include an orientation-detecting unit that detects an orientation of the input device.

In the tactile-sensation-reproducing apparatus according to the present invention, it is preferable that the display panel display a schematic image of the touching object and a simulated image of a hand. It is also preferable that the schematic image of the hand and the fingers that is displayed on the display panel change in accordance with a situation that is displayed on a screen of the display panel. It is also preferable that a position to which the operation member of the input device is made to project or the reaction force to be applied from the operation member to any of the fingers change in correspondence with the change in the schematic image of the hand and the fingers.

For example, the display panel displays at least one of a menu image and a list image. Furthermore, the schematic image of the hand changes such that any of the fingers points the menu image or the list image. Furthermore, the operation member of the input device that is touched with the finger pointing the menu image or the list image is set to an operable position in correspondence with the change.

In such a case, a process of selecting the menu image or the list image by using the schematic image of the finger and pressing the operation member with the finger is regarded as a determining operation.

In the tactile-sensation-reproducing apparatus according to the present invention, the input device may include a plurality of tactile-sensation-generating units each including the operation member, the detecting member, and the motor.

For example, in the tactile-sensation-reproducing apparatus according to the present invention, the input device includes a case, the case has a first surface and a second surface that face toward opposite sides in a first direction, and directions of projection of the operation members of the respective tactile-sensation-generating units are opposite to each other between the direction of projection from the first surface and the direction of projection from the second surface.

In such a case, it is preferable that a plurality of first operation members provided side by side project from the first surface while one second operation member projects from the second surface, and that letting a direction in which the first operation members are provided side by side be a second direction, a length of the second operation member in the second direction be greater than a length of each of the first operation members in the second direction.

Furthermore, it is preferable that the one second operation member be provided opposite the plurality of first operation members in the first direction.

Furthermore, in the tactile-sensation-reproducing apparatus according to the present invention, it is preferable that the second operation member be holdable with a thumb and the first operation members be holdable with a plurality of fingers other than the thumb from either side in a third direction that intersects both the first direction and the second direction.

In the above case, the display panel displays a schematic image of an object, and the input device is configured such that the position to which each operation member is made to project or the reaction force applied from each operation member to any of the fingers is determined in correspondence with a state where the schematic image of the object is held with the fingers.

### Advantageous Effects of Invention

With the tactile-sensation-reproducing apparatus according to the present invention, when the operation member is touched with a finger, a tactile sensation that is the same as that obtained at the touch of a predetermined object can be provided to the finger. Thus, a sensation of hardness, softness, repulsiveness, or the like of the touching object can be provided.

The input device included in the tactile-sensation-reproducing apparatus according to the present invention is configured such that a plurality of operation members can be made to project from the case, and an operation that is the same as an action of pinching an object with fingers, holding an object with a hand, or pressing an object with a finger is performable thereon. In such an operation, a reaction force simulated as a tactile sensation of the object can be provided.

Furthermore, if a schematic image of a predetermined object is displayed such that the touching object is being held by a schematic image of a finger corresponding to a finger that is holding the operation member, the tactile sensation of the object can be provided with a visual effect.

### Brief Description of Drawings

[Fig. 1] Fig. 1 is a diagram illustrating an exemplary state of use of a tactile-sensation-reproducing apparatus according to an embodiment of the present invention.
[Fig. 2] Fig. 2 illustrates an input device included in the tactile-sensation-reproducing apparatus illustrated in Fig. 1 and includes a top perspective view in part (A) and a bottom perspective view in part (B).
[Fig. 3] Fig. 3 is an exploded perspective view of the input device illustrated in Fig. 2.
[Fig. 4] Fig. 4 is a perspective view of a tactile-sensation-generating unit included in the input device illustrated in Fig. 2.
[Fig. 5] Fig. 5 is a block diagram illustrating a configuration of the tactile-sensation-reproducing apparatus according to the embodiment of the present invention.
[Fig. 6] Fig. 6 illustrates an exemplary state of use of the tactile-sensation-reproducing apparatus according to the embodiment, specifically, an image in which a menu item on a display screen is pointed with one finger.
[Fig. 7] Fig. 7 illustrates another exemplary state of use of the tactile-sensation-reproducing apparatus according to the embodiment, specifically, an image displayed when a tactile sensation obtained by pinching an object with two fingers is reproduced.
[Fig. 8] Fig. 8 illustrates yet another exemplary state of use of the tactile-sensation-reproducing apparatus according to the embodiment, specifically, an image displayed when a tactile sensation obtained by holding an object with a plurality of fingers is reproduced.
[Fig. 9] Fig. 9 illustrates yet another exemplary state of use of the tactile-sensation-reproducing apparatus according to the embodiment, specifically, an image displayed when a tactile sensation obtained by pushing an object with one finger is reproduced.
[Fig. 10] Fig. 10 is a graph illustrating an exemplary line of action of reaction force that represents the relationship between the length of travel of an operation member and the reaction force.
[Fig. 11] Fig. 11 is a graph illustrating other exemplary lines of action of reaction force that each represent the relationship between the length of travel of the operation member and the reaction force.
[Fig. 12] Fig. 12 includes part (A) as a graph illustrating yet another exemplary line of action of reaction force that represents the relationship between the length of travel of the operation member and the reaction force, and part (B) as an exemplary graph illustrating the power supplied to a motor for reproducing the graph illustrated in part (A).
[Fig. 13] Fig. 13 is a graph illustrating yet other exemplary lines of action of reaction force that each represent the relationship between the length of travel of the operation member and the reaction force.

### Description of Embodiments

### <Overall Configuration>

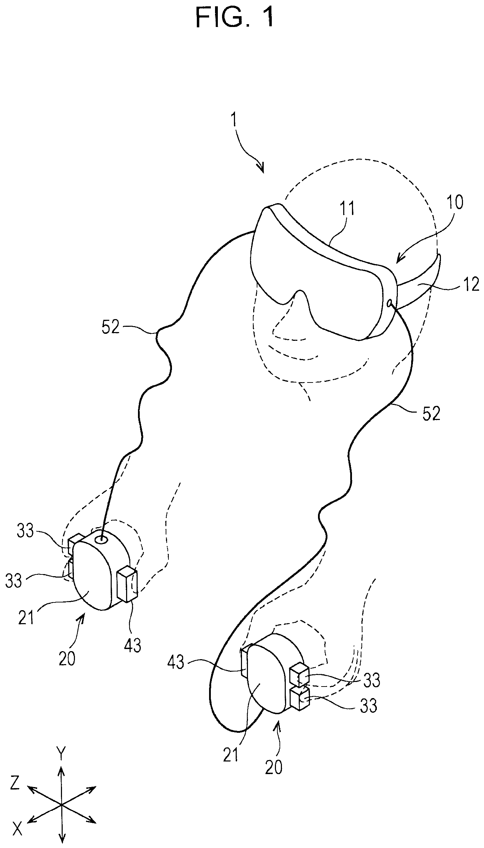

Fig. 1 illustrates a state of use of a tactile-sensation-reproducing apparatus 1 according to the present invention.

The tactile-sensation-reproducing apparatus 1 includes an apparatus body 10 and input devices 20. In Fig. 1, two identical input devices 20 are employed. One of the two input devices 20 is used with the right hand, and the other input device 20 is used with the left hand. As another exemplary usage, the tactile-sensation-reproducing apparatus 1 may include only one input device 20 that is operated with one hand.

The apparatus body 10 includes a mask-shaped body 11 to be worn over the eyes, and a strap 12 for fitting the mask-shaped body 11 around the head.

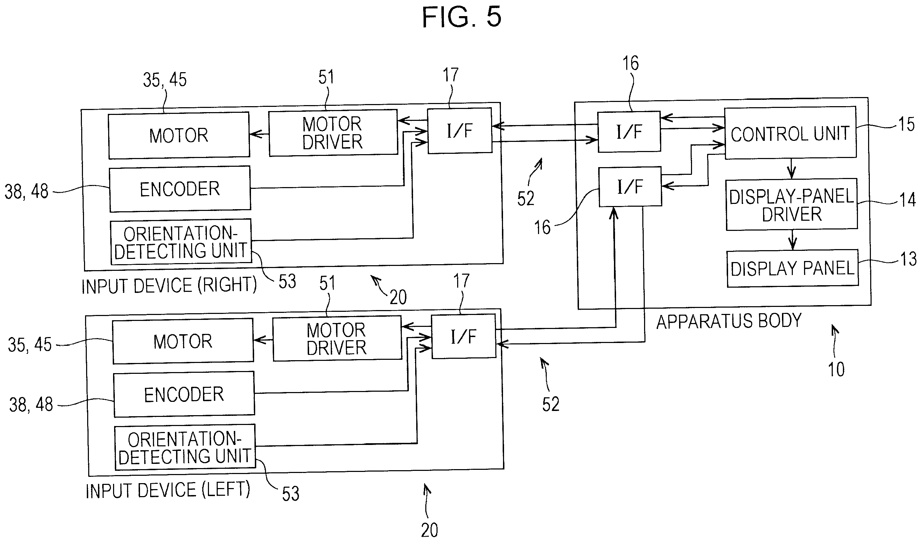

As illustrated in the block diagram in Fig. 5, the mask-shaped body 11 of the apparatus body 10 is provided with a display panel 13. The display panel 13 is positioned in front of the eyes of an operator and so as to be visible to the operator. The mask-shaped body 11 is provided thereinside with a display-panel driver 14 for driving the display panel 13, and a control unit 15 that controls the display mode of the display-panel driver 14. The control unit 15 includes a CPU and a memory, chiefly. The mask-shaped body 11 is further provided with interfaces 16 that each allow the transmission and the reception of a signal between the control unit 15 and a corresponding one of the input devices 20.

The display panel 13 is not limited to be provided to the mask-shaped body 11. The display panel may be placed on a table or the like and may be used as, for example, a display screen of a personal computer, a display screen of a television, or a display screen of a game machine.

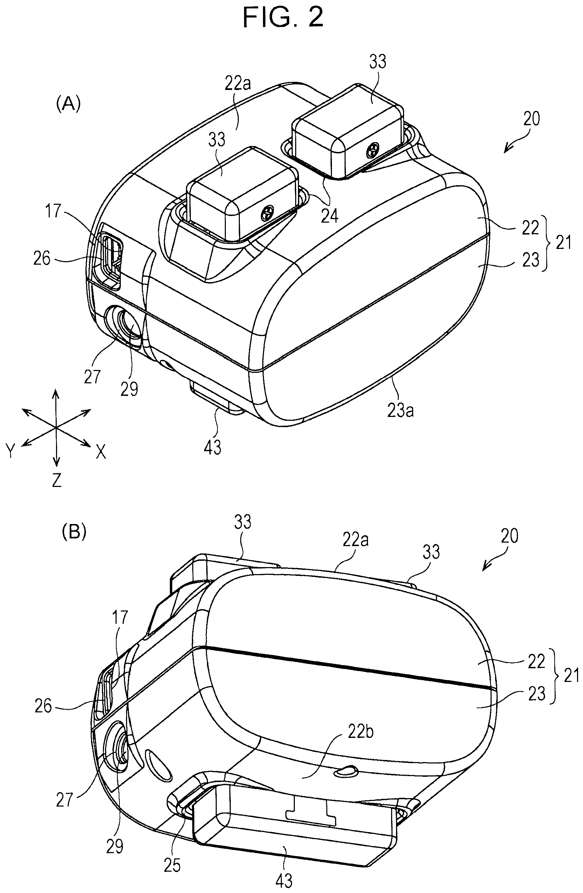

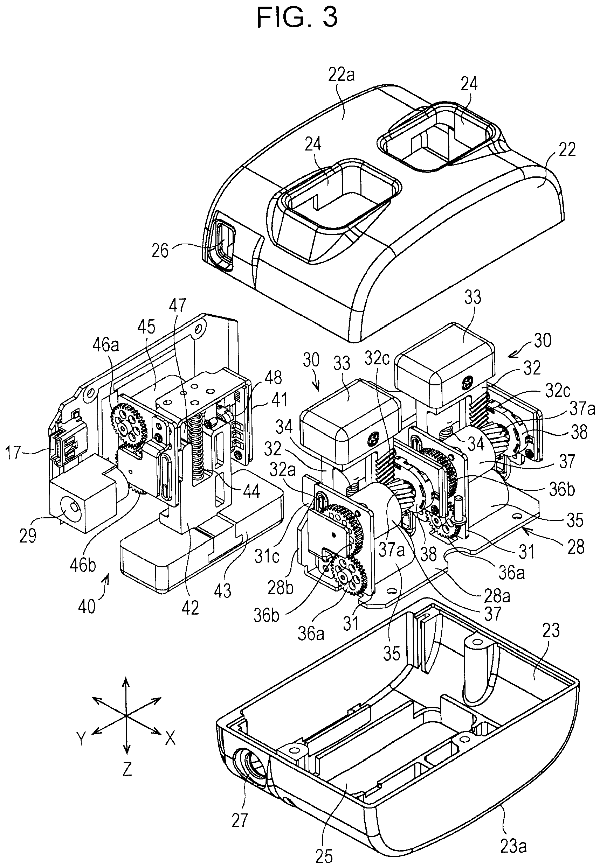

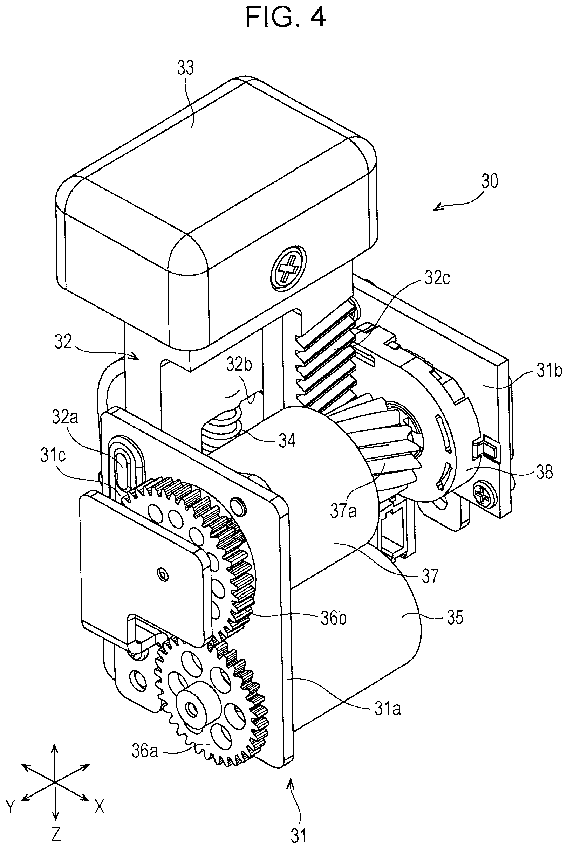

Fig. 2(A) is a top perspective view of the input device 20, illustrating the appearance thereof. Fig. 2(B) is a bottom perspective view of the input device 20, illustrating the appearance thereof. Fig. 3 is an exploded perspective view of the input device 20. Fig. 4 illustrates a configuration of a first tactile-sensation-generating unit 30 provided in the input device 20. Fig. 2(A) and Figs. 3 and 4 each have an X-Y-Z coordinate for the input device 20. The input device 20 is defined by the Z direction as a first direction, the Y direction as a second direction, and the X direction as a third direction.

In the exemplary state of use illustrated in Fig. 1, the input devices 20 are held with two hands, respectively, and are each oriented such that the Y direction as the second direction corresponds to the vertical direction.

As illustrated in Fig. 2, each input device 20 includes a case 21 made of synthetic resin. The case 21 is of a size that is holdable with one hand. The case 21 includes an upper case 22 and a lower case 23 that are joined together. As illustrated in Fig. 3, the upper case 22 and the lower case 23 are separable from each other in the Z direction as the first direction. The upper case 22 and the lower case 23 are fixed to each other with screwing means or the like, whereby a machinery-housing space is provided between the two cases 22 and 23.

A surface of the upper case 22 that faces in the Z direction is denoted as a first surface 22a. A surface of the lower case 23 that faces in the Z direction is denoted as a second surface 23a. As illustrated in Fig. 3, the upper case 22 has operation holes 24 extending through the first surface 22a in the Z direction. The lower case 23 has an operation hole 25 extending through the second surface 23a in the Z direction. The operation holes 24 are arranged side by side in the second direction (the Y direction). The operation hole 25 has a larger opening size in the second direction (the Y direction) than each of the operation holes 24.

An end surface of the upper case 22 that faces in the second direction (the Y direction) has a connector-fitting hole 26. An end surface of the lower case 23 that faces in the Y direction has a power-plug-fitting hole 27.

As illustrated in Fig. 3, a machinery chassis 28 is housed in the machinery-housing space provided inside the case 21. The machinery chassis 28 is a folded metal plate and includes a attaching plate portion 28a extending parallel to the X-Y plane, and a sectioning plate portion 28b extending parallel to the Y-Z plane.

A plurality of first tactile-sensation-generating units 30 are fixed to one third-direction (X-direction) side of the sectioning plate portion 28b. The input device 20 according to the embodiment includes two first tactile-sensation-generating units 30 arranged side by side in the second direction (the Y direction). One second tactile-sensation-generating unit 40 is provided on the other X-direction side of the sectioning plate portion 28b.

### <Configuration of Tactile-Sensation-Generating Unit>

Fig. 4 illustrates a configuration of the first tactile-sensation-generating unit 30.

The first tactile-sensation-generating unit 30 includes a frame 31 formed of a folded metal plate 30. The frame 31 is attached to the sectioning plate portion 28b, whereby the first tactile-sensation-generating unit 30 is mounted on the machinery chassis 28.

The frame 31 is provided with a movable member 32. The movable member 32 is made of a synthetic resin material and has a first operation member 33 fixed to the tip thereof. The first operation member 33 is made of a synthetic resin material. As illustrated in Fig. 2, the first operation member 33 projects to the outside from a corresponding one of the operation holes 24 provided in the upper case 22.

The frame 31 has, in a sidewall portion 31a forming one side thereof, an oblong guide hole 31c extending in the first direction (the Z direction). The movable member 32 has a sliding projection 32a integrally provided on a side thereof. The sliding projection 32a slides within the oblong guide hole 31c, whereby the movable member 32 is supported in such a manner as to be movable in the first direction (the Z direction) along the frame 31. The movable member 32 has a recess 32b. A compression spring 34 is provided in the recess 32b and between the movable member 32 and the lower end of the frame 31. With the elastic force exerted by the compression spring 34, the movable member 32 is urged upward, in the drawing, in the Z direction, i.e., in such a direction that the first operation member 33 is made to project from the upper case 22.

A motor 35 is fixed to the sidewall portion 31a on one side of the frame 31. An output gear 36a is fixed to the output shaft of the motor 35. A reduction gear 36b is rotatably supported on the outer surface of the sidewall portion 31a. The output gear 36a and the reduction gear 36b are in mesh with each other. A gearbox 37 is fixed to the sidewall portion 31a of the frame 31. A reduction mechanism is housed in the gearbox 37. The rotational force exerted by the reduction gear 36b is reduced by the reduction mechanism provided in the gearbox 37. The reduction mechanism in the gearbox 37 includes a sun gear, a planetary gear, and so forth.

A pinion gear 37a is fixed to the reduction output shaft of the gearbox 37. The movable member 32 has a rack portion 32c on a surface of a thick part thereof. The pinion gear 37a and the rack portion 32c are in mesh with each other. The teeth of the pinion gear 38a and the teeth of the rack portion 32c are helical teeth each tilted with respect to the Y direction that is orthogonal to the direction in which the movable member 32 is moved.

Since the compression spring 34 is provided, the backlash between the pinion gear 38a and the rack portion 32c can be eliminated. Note that the compression spring 34 may be omitted.

An encoder 38 is fixed to a sidewall portion 31b on the other side of the frame 31. The encoder 38 is a detecting member including a stator portion that is fixed to the sidewall portion 31b, and a rotor portion that rotates while facing the stator portion. A rotor shaft included in the rotor portion rotates together with the pinion gear 37a. The encoder 38 is of a variable-resistance type. The stator portion has an arc-shaped resistor pattern. The rotor portion includes a slider that slides along the resistor pattern. Alternatively, the encoder 38 may be of a magnetic-detection type. Specifically, the encoder 38 may be a detecting member including a rotating magnet fixed to the rotor portion, and a magnetic detecting element such as a GMR element provided to the stator portion, in which the angle of rotation of the rotor portion is detected by the magnetic detecting element. Alternatively, the encoder 38 may be an optical encoder.

As illustrated in Fig. 3, the second tactile-sensation-generating unit 40 is provided on the other side of the sectioning plate portion 28b of the machinery chassis 28.

The second tactile-sensation-generating unit 40 has the same basic structure as the first tactile-sensation-generating unit 30. In the second tactile-sensation-generating unit 40, a movable member 42 is supported by a frame 41 in such a manner as to be movable in the Z direction, and a second operation member 43 is fixed to the tip of the movable member 42. The second operation member 43 projects downward, in the drawing, from the operation hole 25 provided in the lower case 23. The movable member 42 is urged by a compression spring 44 in such a direction that the second operation member 43 is made to project from the operation hole 25.

A motor 45 is fixed to the frame 41. An output gear 46a, which is fixed to the output shaft of the motor 45, is in mesh with a reduction gear 46b. The rotational force exerted by the reduction gear 46b is reduced by a reduction mechanism provided in a gearbox 47. The reduced force is transmitted from a pinion gear to a rack portion provided on the movable member 42. Then, the rotation of the pinion gear is detected by an encoder 48.

As illustrated in Fig. 3, the case 21 houses a signal connector 17 and a power plug 29. The signal connector 17 is exposed in the connector-fitting hole 26 provided in the upper case 22. The power plug 29 is exposed in the power-plug-fitting hole 27 provided in the lower case 23.

As illustrated as the block diagram in Fig. 5, each of the input devices 20 is provided thereinside with a motor driver 51. The motor 35 provided in the first tactile-sensation-generating unit 30 and the motor 45 provided in the second tactile-sensation-generating unit 40 are driven to rotate by the motor driver 35. The signal connector 17 is a USB interface. In Fig. 5, the interface provided in each input device 20 is denoted by reference numeral 17, which corresponds to the signal connector 17 in Fig. 3.

As illustrated in Fig. 1, the interfaces 16 provided in the apparatus body 10 and the interfaces 17 provided in the respective input devices 20 are connected to each other with respective cords 52. The cords 52 include respective power lines. The power lines are connected to the respective power plugs 29. Electric power is supplied from the apparatus body 10 to the input devices 20 through the respective power lines.

The apparatus body 10 and each of the input devices 20 may alternatively communicate with each other by using RF signals, with batteries provided in the respective input devices 20. In such a case, the cords 52 that connect the apparatus body 10 to the input devices 20 are not necessary.

In addition, the apparatus body 10 preferably has a function of communicating with a server.

Now, a method of operating the tactile-sensation-reproducing apparatus 1 and the behavior of the tactile-sensation-reproducing apparatus 1 will be described.

### <Holding Input Device 20 with Hand>

As illustrated in Fig. 2, the input device 20 includes the case 21, with the plurality of first operation members 33 projecting from the first surface 22a and with the one second operation member 43 projecting from the second surface 22b. The first operation members 33 and the second operation member 43 project toward opposite sides in the first direction (the Z direction). Hence, as illustrated in Fig. 1, each of the input devices 20 is holdable with one hand such that the second operation member 43 is pressed with the thumb while the first operation members 33 are pressed with the index and middle fingers, respectively.

The plurality of first operation members 33 are arranged side by side in the second direction (the Y direction). The length of the second operation member 43 in the Y direction is greater than the length of the first operation members 33 in the Y direction. Hence, the two first operation members 33 are both provided opposite the second operation member 43 in the first direction (the Z direction). Therefore, while the first operation members 33 are pressed with the index and middle fingers, a wide area of the second operation member 43 is holdable with the thumb.

The first operation members 33 and the second operation member 43 are positioned in a central part of the case 21 in the X direction (the third direction). The input devices 20 each have a substantially symmetrical shape with respect to the X-Z plane and with respect to the Y-Z plane. Therefore, the input device 20 is holdable in the same manner from the right side and from the left side, in the drawing, in the X direction, providing ease of handling.

### <Behavior of Input Device 20>

The input device 20 behaves as follows. When a control command is transmitted from the control unit 15 to the motor driver 51, the motors 35 of the first tactile-sensation-generating units 30 and the motor 45 of the second tactile-sensation-generating unit 40 are activated in accordance with the control command. By controlling the rotation of the motors 35 and the motor 45, the movable members 32 and the movable member 42 can be moved to any positions and be stopped at those positions, respectively. For example, the operation members 33 and the operation member 43 can be stopped at respective positions where the operation members 33 and the operation member 43 are made to project from the case 21 to the maximum extent, or at respective positions where the operation members 33 and the operation member 33 are retracted into the case 21 to the maximum extent. Moreover, the operation members 33 and the operation member 43 can each be stopped at any position between the most projected position and the most retracted position.

Furthermore, by controlling the power to be supplied to the motors 35 and the motor 45, the rotors of the motors 35 and 45 can each be retained with a strong force such that a corresponding one of the operation members 33 and the operation member 43 projecting from the case 21 is immovable even if it is pressed with a finger.

In a state where the movable members 32 and the movable member 42 are allowed to move, any of the operation members 33 and the operation member 43 are pressed. When corresponding ones of the movable members 32 and the movable member 42 are moved in the direction of pressing, detection outputs from corresponding ones of the encoders 38 and the encoder 48 are transmitted to the control unit 15. Then, the control unit 15 recognizes the positions of the moved ones of the operation members 33 and the operation member 43. The control unit 15 stores lines of action of reaction force (coefficients of action of reaction force) that each represent the relationship between the length of travel and the reaction force. In accordance with the positions of the moved ones of the operation members 43 and the operation member 43, corresponding ones of the motors 35 and the motor 45 generate respective torques with reference to the lines of action of reaction force. Thus, reaction forces are applied from the moved ones of the operation members 33 and the operation member 43 to corresponding ones of the fingers.

### <Tactile-Sensation Reaction Force Generated by Tactile-Sensation-Reproducing Apparatus 1>

In the tactile-sensation-reproducing apparatus 1, the control unit 15 stores pieces of information on an object to be held with hands in simulation. The pieces of information include the shape, the size, the surface hardness or softness, the elasticity, and so forth.

For example, the control unit 15 stores the above pieces of information on each of a plurality of products provided in a product catalog listing a predetermined group of products. Such pieces of information are downloaded from a server to the control unit 15 over the Internet or the like. Alternatively, the control unit 15 may receive pieces of information on an object when a storage medium that stores a product catalog or the like is connected to the apparatus body 10.

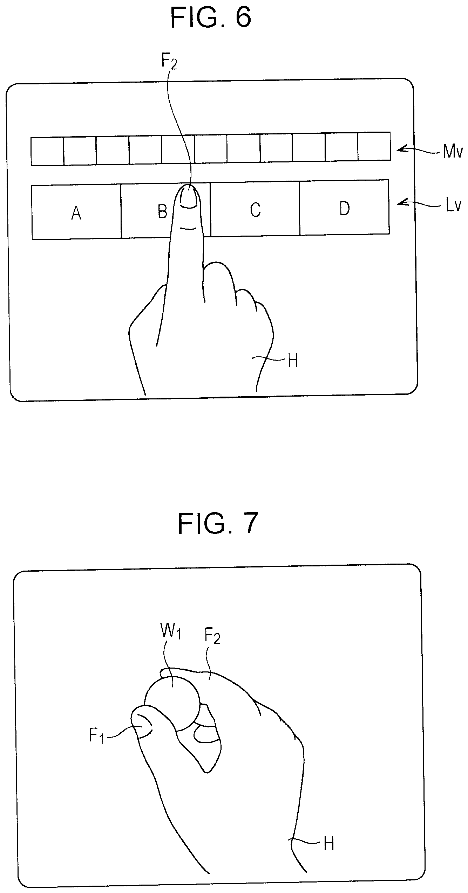

As illustrated in Fig. 6, when the tactile-sensation-reproducing apparatus 1 is activated, the display panel 13 displays a menu image Mv that allows the performance of any displaying operation and a list image Lv of product catalogs. If the operator moves the input devices 20 while looking at the displayed items, the operator can select a menu or a list and can further select any product to be displayed.

In the tactile-sensation-reproducing apparatus 1, the positions to which the respective operation members 33 and 34 are made to project from the case 21 or the reaction forces applied from the operation members 33 and 34 to the respective fingers change in the input device 20 with what is displayed on the screen of the display panel 13.

If the image displayed on the display panel 13 provides menu items as illustrated in Fig. 6, a hand H on the display screen is schematically imaged such that only an index finger F2 is extended while the other fingers are curled. In correspondence with this, the control unit 15 transmits a state-setting command to the input device 20. Thus, the input device 20 falls into a state where only one of the first operation members 33 that is held with the index finger is operable or movable, while the other first operation member 33 and the second operating member 43 are retracted in such a manner as not to project significantly from the case 21. Alternatively, those of the operation members 33 and 43 that are held with fingers other than the index finger are made immovable with increased loads applied to corresponding ones of the motors 35 and 45.

As illustrated in Fig. 5, each input device 20 includes an orientation-detecting unit 53. The orientation-detecting unit 53 is, for example, a magnetic sensor that detects a geomagnetic sensor or an oscillatory gyro device. The orientation-detecting unit 53 is capable of detecting the orientation of the input device 20 in an operation space or the position of the input device 20 in the operation space.

If the operator moves the input device 20 and changes the orientation of the input device 20 while looking at the product catalog displayed on the display panel 13, the schematic image of the hand H in the display screen is moved such that the index finger F2 selects any of the items in the menu image Mv or in the list image Lv. In such a selecting operation, a product to be displayed is selected. Then, if the operation member 33 is pressed with the index finger, such an operation is detected by the encoder 38 and a detection signal is transmitted from the encoder 38 to the control unit 15. Thus, the control unit 15 recognizes that the first operation member 33 has been pressed, and the selection of the product is determined.

The operation of selecting and determining the menu image Mv or the list image Lv illustrated in Fig. 6 may be performed with the middle finger or the thumb, instead of the index finger.

In the display mode illustrated in Fig. 6, the menu image Mv or the list image Lv is regarded as the touching object.

When any product is selected, the product is designated as the touching object, which is the object to be touched with the hand. As illustrated in Figs. 7 to 9, once the object to be touched with the hand is designated, an image of an object W1, W2, or W3 thus designated and a schematic image simulated as the hand H of the operator are displayed on the display panel 13.

The position or the orientation of the input device 20 held by the hand in a space is detected by the orientation-detecting unit 53. Information thus detected is transmitted to the control unit 15. In accordance with the orientation of the input device 20, the control unit 15 generates a schematic image to be displayed on the display panel 13. Furthermore, in accordance with the position and the orientation of the input device 20, the control unit 15 changes the position and the orientation of the schematic image of the hand H or the schematic image of the fingers to be displayed on the display panel 13.

Note that, in an image of various shops that is displayed on the display panel 13, if any of products provided in the shops displayed is selected by operating the input device 20 held in the hand, that product can be designated as the object to be touched with the hand.

The object W1 illustrated in Fig. 7 is of a size that is holdable with a thumb F1 and the index finger F2. The display panel 13 shows a state where the object W1 is held with a schematic image of the thumb F1 and a schematic image of the index finger F2.

In the display example illustrated in Fig. 7, the object W1 is pinched only with the thumb F1 and the index finger F2. Therefore, the schematic image of the hand H on the display panel 13 is depicted with the middle and other fingers being curled.

In such a case, the control unit 15 transmits a state-setting command to the motor driver 51 of the input device 20, whereby the second operation member 43 that is touched with the thumb F1 and one of the first operation members 33 that is touched with the index finger F2 are made operable. For the first operation member 33 that faces the middle finger, the motor 35 of the first tactile-sensation-generating unit 30 is activated such that the first operation member 33 facing the middle finger is retracted so as not to project from the first surface 22a of the case 21. Alternatively, a large load may be applied to the motor 35 of the first tactile-sensation-generating unit 30 so that the rotor thereof does not rotate easily, prohibiting the first operation member 33 that is touched with the middle finger from moving.

Specifically, the input device 20 is configured such that the positions to which the operation members 33 and 43 are made to project from the case 21 or the reaction forces applied from the operation members 33 and 43 to the respective fingers change in accordance with the type of the object that is displayed on the display panel 13.

When the first operation members 33 and the second operation member 43 are pressed with corresponding ones of the actual fingers, pieces of information on the positions thereof are transmitted from the encoders 38 and 48 to the control unit 15. Then, the control unit 15 controls the state of display such that the schematic image of the thumb F1 and the schematic image of the index finger F2 that are displayed on the display panel 13 move toward each other in accordance with the lengths by which the first operation members 33 and the second operation member 43 are moved toward each other.

That is, the movements of the schematic images of the hand and the fingers change with the movements of the operation members 33 and 43 included in the input device 20.

The detection signal from the encoder 38 of the first tactile-sensation-generating unit 30 that is touched with the index finger F2 and the detection signal from the encoder 48 of the second tactile-sensation-generating unit 40 that is touched by the thumb F1 are transmitted to the control unit 15. In the control unit 15, pieces of information on the shape and the size of the object W1 and the detection signals from the encoders 38 and 48 are compared. At the beginning of pressing of the second operation member 43 and the first operation member 33 with the thumb F1 and the index finger F2, substantially no rotational loads are applied to the motors 35 and 45, and the thumb F1 and the index finger F2 therefore receive substantially no loads. Consequently, the operator feels as if his/her thumb F1 and index finger F2 were moving freely in the space.

When the detection signals from the encoders 38 and 48 indicate that the distance between the thumb F1 and the index finger F2 has become the same as the size of the object W1, the control unit 15 transmits a control command to the motor driver 51 such that rotational loads are applied to the motors 35 and 45. Thus, reaction forces simulated as if the object W1 were pinched are applied to the thumb F1 and the index finger F2, respectively.

Alternatively, the following process may be employed. When the second operation member 43 and the first operation member 33 start to be pressed with the thumb F1 and the index finger F2, the motors 35 and 45 are caused to generate weak driving forces, respectively, whereby moving forces that cause the second operation member 43 and the first operation member 33 to move toward each other are applied to the second operation member 43 and the first operation member 33. Then, when the distance between the thumb F1 and the index finger F2 has become the same as the size of the object W1, loads are applied to the motors 35 and 45, respectively. In such a process, it is possible to make the operator feel no resistances on his/her fingers at the beginning of operation with the thumb F1 and the index finger F2. Furthermore, the elastic forces of the compression springs 34 and 44 can be cancelled out. Hence, it is easier to give the operator a sensation of pinching the object W1 with the thumb F1 and the index finger F2 that are freely moved in the space.

Moreover, the positions to which the first operation member 33 touched with the index finger F2 and the second operation member 43 touched with the thumb F1 are made to project from the case 21 may be determined in accordance with the shape and the size of the schematic image of the object W1 displayed on the display panel 13.

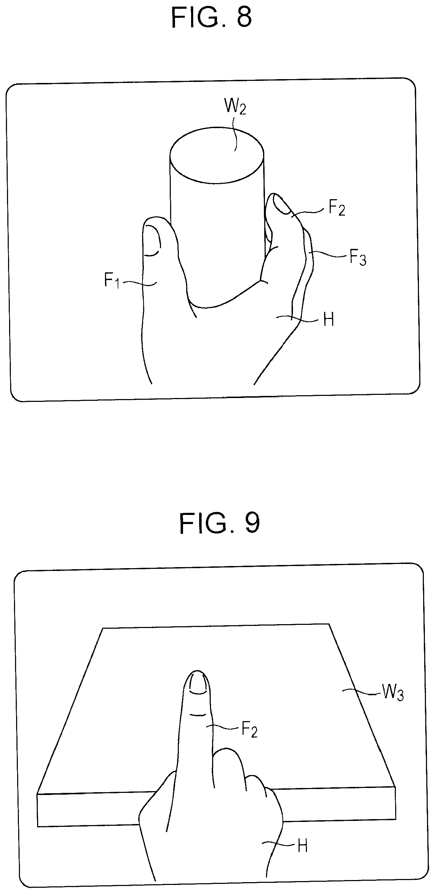

The object W2 illustrated in Fig. 8 is of a size that is holdable with one hand, specifically, a size that is holdable with the thumb F1, the index finger F2, and a middle finger F3.

When the object W2 is selected as the touching part and the schematic image of the object W2 is displayed on the display panel 13, the schematic image of the hand H or the fingers is changed into a state where the object W is held with the hand H or the fingers. Then, the control unit 15 transmits a state-setting command to the input device 20, whereby the input device 20 changes its state in accordance with the shape and the size of the object W2 or the schematic image of the hand. Specifically, in the input device 20, the positions to which the first operation members 33 and the second operation member 43 are made to project are set. Thus, the operator can feel like holding the object W2 displayed on the screen with his/her actual hand.

In such a case, detection outputs from the encoders 38 included in the two tactile-sensation-generating units 30 included in the input device 20 and a detection output from the encoder 48 included in the tactile-sensation-generating unit 40 are transmitted to the control unit 15, and the control unit 15 controls the three motors 35 and 45.

In another control process, when the second operation member 43 starts to be pressed with the thumb F1 and the two first operation members 33 start to be pressed with the index finger F2 and the middle finger F3, no loads are applied to the motors 35 and 45 in the beginning, or the movable members 32 and 42 are moved such that the operation members 33 and the operation member 34 are brought toward each other. Thus, it is possible to make the operator feel as if the fingers F1, F2, and F3 were moving in the space. When the distances among the fingers F1, F2, and F3 have become the same as the respective lengths that define the outer shape of the object W2, loads are applied to the motors 35 and 45, respectively. Thus, reaction forces that give the same tactile sensation as that given when the object W2 is held with the fingers F1, F2, and F3 are generated.

The object W3 illustrated in Fig. 9 is touchable with the index finger F2 of one hand.

In a state where an image of the object W3 is displayed on the display panel 13, the rotational load applied to the motor 35 of the first tactile-sensation-generating unit 30 touched with the middle finger F3 is increased and the rotational load applied to the motor 45 of the second tactile-sensation-generating unit 40 touched with the thumb F1 is increased in accordance with the state-setting command transmitted from the control unit 15, whereby the first operation member 33 touched with the middle finger F3 and the second operation member 43 touched with the thumb F1 are kept immovable while only the first operation member 33 touched with the index finger F2 is allowed to move.

As described above, the states of the operation members 33 and 43 of the input device 20 are set in accordance with the schematic image of the object (touching object) W2 or the schematic image of the hand H that is displayed on the display panel 13.

In a motion of actually touching the object W2 with the index finger F2, the orientation-detecting unit 53 provided in the input device 20 detects the orientation and the position of the hand. As illustrated in Fig. 9, while the operator is looking at the image of the hand H displayed on the display panel 13, the operator holds the input device 20 with the back of his/her hand facing upward. In such a state, the operator moves his/her hand toward the image of the object W3. In this step, no load is applied to the motor 35 of the first tactile-sensation-generating unit 30 touched with the index finger F2, making the operator feel as if he/she were moving his/her index finger F2 freely in the space. When the index finger F2 has touched the surface of the object W3 in the image, the rotational load applied to the motor 35 of the first tactile-sensation-generating unit 30 is increased. Thus, a reaction force that makes the operator feel as if his/her index finger F2 had touched the surface of the object W3 is applied from the first operation member 33 to the index finger F2.

In such a case, in the schematic image of the hand H displayed on the display panel 18, the fingers other than the index finger F2 are displayed in curled states as illustrated in Fig. 9.

### <Hardness, Softness, Repulsiveness, etc.>

The control unit 15 monitors the detection signals of the encoders 38 and 48. As illustrated in any of Figs. 7 to 9, if it is determined that the fingers are at the distances from one another as if they were holding the object W1 or W2 or if it is determined that a finger is moved to a position as if it touched the object W3, a control signal for generating a sensation of texture is supplied to the motor driver 51. Then, the degrees of reaction forces to be applied from the first operation members 33 and the second operation member 43 to the respective fingers are controlled, and such reaction forces for generating a sensation of hardness, softness, or elasticity of the object W1, W2, or W3 are applied to the fingers.

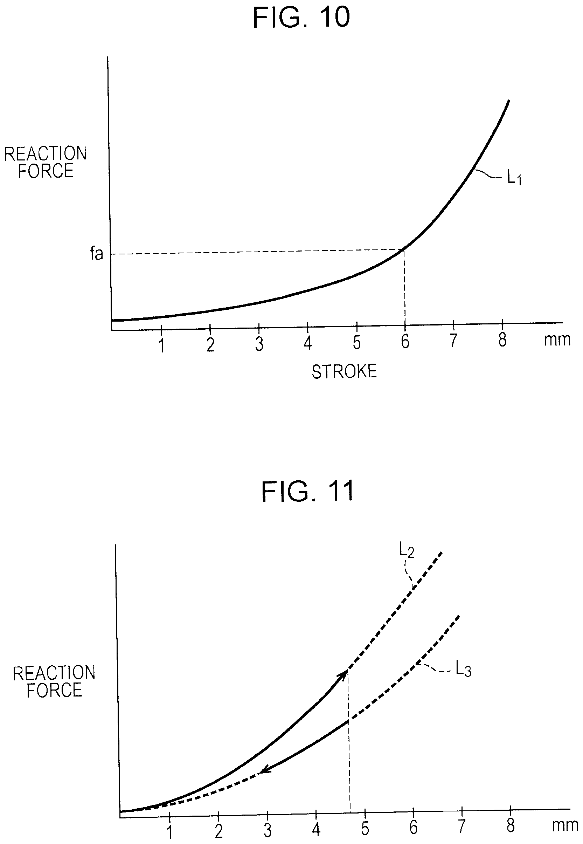

Fig. 10 illustrates an exemplary line of action of reaction force (the coefficient of action of reaction force) L1 that represents the relationship between the stroke of the operation member 33 or 43 that is pressed and the reaction force applied from the first operation member 33 or 43 to the finger.

In a control process for giving a sensation of texture, when the positions of the operation members 33 and 43 are detected on the basis of the detection outputs from the encoders 38 and 48, the respective reaction forces are each determined with reference to the line of action of reaction force L1 and in conjunction with the pressing stroke that is made at that point of time. The line of action of reaction force L1 illustrated in Fig. 10 indicates that the reaction force applied to each finger increases as a corresponding one of the operation members 33 and 43 is pressed down with the finger.

For example, when the stroke of the operation member 33 or 43 that is being pressed has reached 6 mm, a reaction force fa is applied to the finger. The reaction force fa may be the sum of the reaction force applied to the thumb F1 and the reaction force applied to the index finger F2. Alternatively, the reaction force fa may be applied to each of the thumb f1 and the index finger F2. This also applies to a case where reaction forces are applied to the thumb F1, the index finger F2, and the middle finger F3, respectively. If the object W3 is pressed only with the index finger F2 as illustrated in Fig. 9, the reaction force fa is applied to the index finger F2.

Referring to the line of action of reaction force L1 illustrated in Fig. 10, if the force exerted by the finger is reduced at a pressing stroke of 6 mm, the movable member 32 or 42 is moved by the reaction force fa generated at that point of time and in such a direction that the movable member 32 or 42 is made to project, whereby the finger is pushed back by the operation member 33 or 43. Subsequently, as the pressing stroke is reduced to 5 mm, to 4 mm, and to 3 mm, the reaction force applied to the finger is reduced.

If the above line of action of reaction force L1 is set, the operator can be made to feel as if the object W1 pinched with his/her fingers, the object W2 held with his/her fingers, or the object W3 pressed with his/her index finger had elasticity. The sensation of hardness, softness, or elasticity can be set freely by changing the line of action of reaction force illustrated in Fig. 10.

In the setting of the reaction force illustrated in Fig. 11, a line of action L2 of the reaction force applied to the finger when the operation member 33 or 43 is pressed gradually and a line of action L3 of the reaction force applied to the finger when the operation member 33 or 43 returns are represented by different curves.

In such a setting of the reaction force, for example, the reaction force that is applied to the finger gradually increases by following the line of action of reaction force L2 until the stroke of the operation member 33 or 43 that is pressed with the finger reaches about 5 mm. If the force exerted by the finger pressing the operation member is reduced at a pressing stroke of 5 mm, the finger is pushed backward by the reaction force that is set forth by the line of action of reaction force L2. However, when the encoder 38 or 48 detects that the operation member 33 or 43 has been pushed backward together with the finger, a reaction force for the returning motion that is applied thereafter to the finger from the operation member 33 or 43 follows the line of action of reaction force L3.

In the setting of the reaction force illustrated in Fig. 11, a sensation of elasticity accompanied by viscosity that delays the returning motion occurring after the pressing motion can be provided.

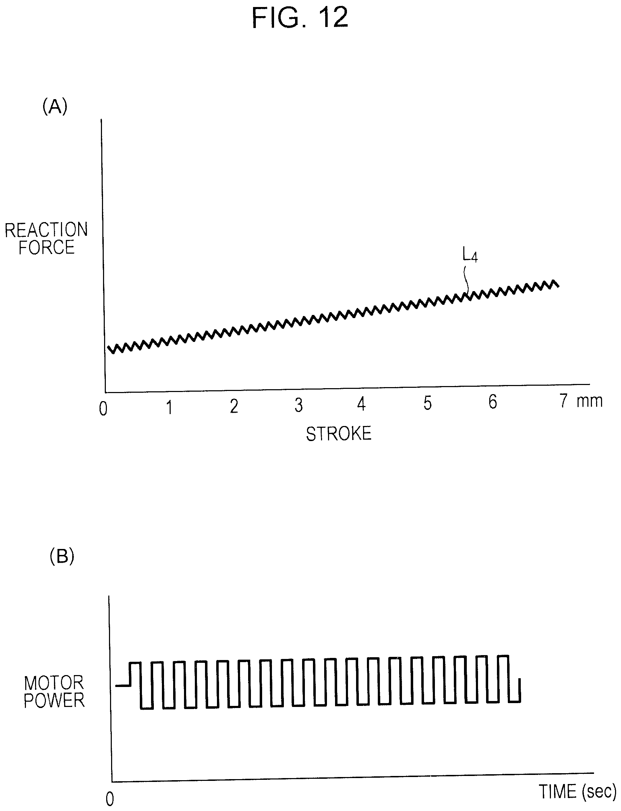

Referring now to a line of action of reaction force L4 illustrated in Fig. 12(A), the reaction force gradually increases with the increase in the stroke of the operation member 33 or 43 that is pressed. Note that the reaction force changes little by little in such a manner as to oscillate with a short cycle. Specifically, as the pressing stroke increases, the power supplied to the motor 35 or 45 increases while gradually increasing the reaction force. In this process, the power supplied to the motor is controlled to fluctuate with a predetermined period as illustrated in Fig. 12(B). For example, the period with which the power is supplied is 10 msec or shorter.

If the torque of the motor 35 or 45 is caused to fluctuate slightly as described above, the reaction force applied from the operation member 33 or 43 to the finger of the operator can provide a viscous sensation. That is, a reaction force resembling a sensation obtained when a viscoelastic body is pressed with the finger can be provided. Such a viscous sensation can be set by changing the period or the duty ratio of the cycle, illustrated in Fig. 12(B), with which the power is supplied.

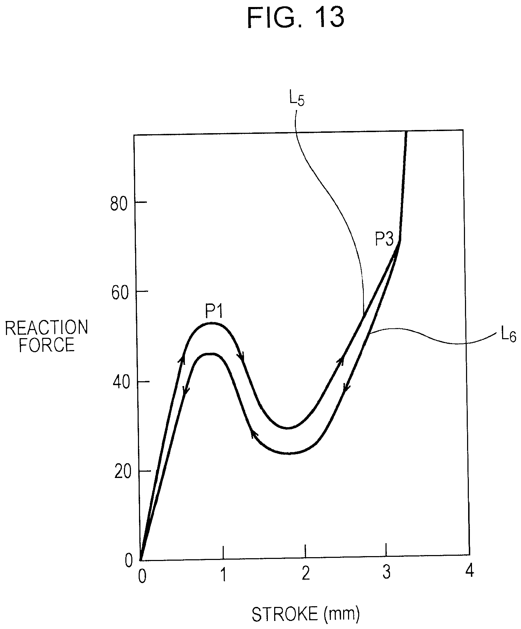

Lines of action of reaction force L5 and L6 illustrated in Fig. 13 are set as a simulation of the reaction force obtained in a case where the object displayed on the display panel 13 is an electronic mechanical component such as a push switch.

When the first operation member 33 is pressed with the index finger F2 as if an operation knob of the push switch displayed on the screen were pressed with the index finger, a reaction force following the line of action of reaction force L5 illustrated in Fig. 13 is generated during the pressing motion, whereas a reaction force following the line of action of reaction force L6 is applied to the finger after the force exerted by the finger is reduced.

Hence, the operator can feel, with his/her finger, how the tactile sensation obtained at the operation of the push switch selected in the image is like.

As a variation of the reaction force to the finger that is generatable by each of the tactile-sensation-generating units 30 and 40 of the input device 20, the following may be employed, for example. At the beginning of the pressing motion made by the finger, the reaction force may be generated as an elastic sensation. Then, when the pressing motion is continued to some extent, the reaction force may be generated as a hard sensation by prohibiting the further pressing with the finger. Such a process is a simulation of a sensation obtained when the surface of a hand of a person is pressed with a finger.

As another variation, the operation members 33 and 43 may be vibrated so as to give a vibrating sensation to the fingers. In such a case, a reaction force obtained as if the operator were touching a small animal with his/her fingers can be provided.

### Reference Signs List

W1, W2, W3 object
1 tactile-sensation-reproducing apparatus
10 apparatus body
11 mask-shaped body
13 display panel
15 control unit
20 input device
21 case
22a first surface
23a second surface
24, 25 operation hole
28 machinery chassis
30 first tactile-sensation-generating unit
32 movable member
33 first operation member
35 motor
38 encoder (detecting member)
40 second tactile-sensation-generating unit
42 movable member
43 second operation member
45 motor
48 encoder
W1, W2, W3 object
L1, L2, L3, L4, L5, L6 line of action of reaction force

## Claims

1. A tactile-sensation-reproducing apparatus comprising:
an input device and a control unit,
wherein the input device includes an operation member that is pressable with a finger and is movable back and forth, a detecting member that detects a position to which the operation member is moved, and a motor that applies a force to the operation member,
wherein the control unit stores information on a tactile sensation of a predetermined touching object, and
wherein the control unit controls an output of the motor such that if it is detected with reference to a detection signal from the detecting member that the operation member is pressed with a finger, a reaction force simulated as a tactile sensation of the touching object is applied from the operation member to the finger.

2. The tactile-sensation-reproducing apparatus according to Claim 1, wherein the control unit stores information on a size of the touching object, and wherein if it is detected with reference to the detection signal from the detecting member that the operation member is moved by a length corresponding to a length by which the finger is to be moved to touch the touching object, the control unit controls the output of the motor such that a reaction force starts to be applied from the operation member to the finger at a position of the detection.

3. The tactile-sensation-reproducing apparatus according to Claim 1 or 2, wherein the input device includes an orientation-detecting unit that detects an orientation of the input device.

4. The tactile-sensation-reproducing apparatus according to any of Claims 1 to 3, wherein the display panel displays a schematic image of the touching object and a simulated image of a hand, wherein the schematic image of the hand and the fingers that is displayed on the display panel changes in accordance with a situation that is displayed on a screen of the display panel, and wherein a position to which the operation member of the input device is made to project or the reaction force to be applied from the operation member to any of the fingers changes in correspondence with the change in the schematic image of the hand and the fingers.

5. The tactile-sensation-reproducing apparatus according to Claim 4, wherein the display panel displays at least one of a menu image and a list image, wherein the schematic image of the hand changes such that any of the fingers points the menu image or the list image, and wherein the operation member of the input device that is touched with the finger pointing the menu image or the list image is set to an operable position in correspondence with the change.

6. The tactile-sensation-reproducing apparatus according to Claim 5, wherein a process of selecting the menu image or the list image by using the schematic image of the finger and pressing the operation member with the finger is regarded as a determining operation.

7. The tactile-sensation-reproducing apparatus according to any of Claims 1 to 3, wherein the input device includes a plurality of tactile-sensation-generating units each including the operation member, the detecting member, and the motor.

8. The tactile-sensation-reproducing apparatus according to Claim 7, wherein the input device includes a case, wherein the case has a first surface and a second surface that face toward opposite sides in a first direction, and wherein directions of projection of the operation members of the respective tactile-sensation-generating units are opposite to each other between the direction of projection from the first surface and the direction of projection from the second surface.

9. The tactile-sensation-reproducing apparatus according to Claim 8, wherein a plurality of first operation members provided side by side project from the first surface while one second operation member projects from the second surface, and wherein letting a direction in which the first operation members are provided side by side be a second direction, a length of the second operation member in the second direction is greater than a length of each of the first operation members in the second direction.

10. The tactile-sensation-reproducing apparatus according to Claim 9, wherein the one second operation member is provided opposite the plurality of first operation members in the first direction.

11. The tactile-sensation-reproducing apparatus according to Claim 9 or 10, wherein the second operation member is holdable with a thumb and the first operation members are holdable with a plurality of fingers other than the thumb from either side in a third direction that intersects both the first direction and the second direction.

12. The tactile-sensation-reproducing apparatus according to Claim 4, wherein the display panel displays a schematic image of an object, and wherein the input device is configured such that the position to which each operation member is made to project or the reaction force applied from each operation member to any of the fingers is determined in correspondence with a state where the schematic image of the object is held with the fingers.
